# FASCICULE DE BREVET EUROPEEN

(11) **EP 3 844 466 B1**
(45) Date de publication et mention de la délivrance du brevet: **14.09.2022**
(21) Numéro de dépôt: 19801949.9
(22) Date de dépôt: 03.10.2019
(51) Int. Cl.: G01K 11/32

(54) **CAPTEUR DE TEMPÉRATURE À RÉSEAU DE BRAGG INSENSIBLE AUX DÉFORMATIONS**
DEFORMATIONSUNEMPFINDLICHER BRAGG-GITTER-TEMPERATURSENSOR
DEFORMATION-INSENSITIVE BRAGG GRATING TEMPERATURE SENSOR

(30) Priorité: 08.10.2018 FR 1859319
(43) Date de publication de la demande: 07.07.2021
(73) Titulaire: Commissariat à l'énergie atomique et aux énergies alternatives, 75015 Paris (FR)
(72) Inventeur: ROUSSEL, Nicolas, 75010 PARIS (FR); COTILLARD, Romain, 78490 BAZOCHES SUR GUYONNE (FR); LAFFONT, Guillaume, 92190 MEUDON (FR)
(74) Mandataire: Brevalex
(86) Numéro de dépôt international: PCT/FR2019/052342
(87) Numéro de publication internationale: WO 2020/074808

(56) Documents cités:
- GB-A- 2 441 782
- SONG E A ED - LEE BYOUNGHO ET AL: "SIMULTANEOUS MEASUREMENT OF TEMPERATURE AND STRAIN USING TWO FIBER BRAGG GRATINGS EMBEDDED IN A GLASS TUBE", OPTICAL FIBER TECHNOLOGY, ELSEVIER, AMSTERDAM, NL, vol. 3, no. 2, 1 avril 1997 (1997-04-01), pages 194-196, XP002083806, ISSN: 1068-5200, DOI: 10.1006/OFTE.1997.0215 cité dans la demande

## Description

### DOMAINE TECHNIQUE

L'invention se situe dans le domaine des capteurs de température et, plus précisément, dans le domaine des capteurs de température à fibre optique à réseau de Bragg. Elle concerne un tel capteur de température, un procédé de fabrication de ce capteur de température, un capteur de température et de déformation comprenant un tel capteur, ainsi qu'un ensemble de mesure comprenant ce capteur de température.

L'invention trouve notamment une utilité dans des applications de contrôle de santé intégré, le capteur de température pouvant être intégré à la surface d'une structure à surveiller, voire au sein de cette structure.

### ÉTAT DE LA TECHNIQUE ANTÉRIEURE

Le contrôle de santé intégré, ou « structural health monitoring » en anglais, consiste à mesurer les sollicitations thermiques et/ou mécaniques appliquées à une structure et à en déduire un état de cette structure, notamment la présence de dommages. Les capteurs à fibre optique à réseau de Bragg sont particulièrement appropriés pour la réalisation de ces mesures. Ils permettent de fournir des mesures de température et de déformation aussi bien en régime statique ou quasi-statique qu'en régime dynamique. Il est notamment possible d'effectuer des mesures vibratoires, des mesures d'accélération ou encore de détecter des ondes acoustiques. Les données collectées peuvent alors être exploitées pour détecter et caractériser la présence d'un dommage dans la structure. En outre, un même capteur à fibre optique peut comporter plusieurs réseaux de Bragg agissant dans des bandes de longueurs d'onde différenciées et fournissant ainsi autant d'éléments sensibles pour une même fibre optique, ces éléments étant adressables individuellement par multiplexage spectral. Un adressage individuel est également possible par multiplexage temporel ou par multiplexage à la fois spectral et temporel. Il est alors en outre possible de localiser un dommage dans la structure. Une difficulté associée aux capteurs à réseaux de Bragg est qu'ils sont sensibles aux variations de longueur de leurs réseaux de Bragg indépendamment de l'origine thermique ou mécanique de ces variations de longueur. Ainsi, pour un réseau de Bragg donné, la variation de sa longueur, mesurée par variation de la longueur d'onde de Bragg, ne permet pas de déterminer directement une variation de température ou de déformation d'origine purement mécanique.

Une solution pour découpler les mesures de déformation d'origine mécanique de celles d'origine thermique a notamment été proposée dans M. Song, S. B. Lee, S. S. Choi et B. Lee, « Simultaneous Measurement of Temperature and Strain Using Two Fiber Bragg Gratings Embedded in a Glass Tube », Optical Fiber Technology 3, p. 194-196, 1997. Le principe repose sur l'utilisation de deux réseaux de Bragg aux caractéristiques supposées identiques sur une même fibre. Un premier réseau de Bragg est soumis simultanément aux deux sollicitations extérieures : température et déformation. Un second réseau de Bragg, positionné en bout de fibre optique, est isolé mécaniquement en introduisant le bout de fibre optique dans un tube capillaire. La fibre optique, n'étant fixée que d'un seul côté, est libre mécaniquement et ne sera donc sensible qu'aux variations de températures. La résolution d'un système de deux équations à deux inconnues permet alors de déterminer chacune des inconnues, à savoir la variation de température et la variation de contrainte. Un inconvénient de cette solution est que le capteur présente un encombrement supérieur à celui de la fibre optique, ce qui est susceptible de compliquer son intégration dans une structure. Un autre inconvénient est que la résolution spatiale est limitée par la présence de deux réseaux de Bragg en série pour un seul point de mesure. La solution présente encore l'inconvénient d'être incompatible avec un multiplexage, dans la mesure où la fibre optique contenant le réseau de Bragg affecté à la mesure de température est coupée au bout pour être enfermée dans un capillaire.

Il a également été proposé de mesurer des températures à l'aide de fibres optiques présentant un réseau à longue période, ou « Long-Period Grating (LPG) » en anglais. Ces fibres optiques sont par exemple décrites dans A. M. Vengsarkar, P.J. Lemaire, J. B. Judkins, V. Bathia, T. Erdogan et J. E. Sipe, « Long-period fiber gratings as band-rejection fulters », Journal of Lightwave technology, p. 58-65, 1996 et dans V. Bathia et A. M. Vengsarkar, « Optical fiber long-period grating sensors », Optics Letters, P. 692-694, 1996. Elles présentent des propriétés utiles pour le découplage puisque, d'une part, elles sont environ deux fois moins sensibles à la déformation et cinq fois plus sensibles aux variations de température qu'une fibre optique à réseau de Bragg classique. Ainsi, une fibre optique LPG peut présenter une sensibilité à la déformation de 0,5 pm/µε (picomètre par µε, où µε désigne une variation de la longueur de la fibre optique, en micromètres par mètre) et de 60 pm/°C (picomètre par degré Celsius). Des combinaisons de plusieurs fibres optiques LPG ou d'une fibre optique LPG avec une fibre optique à réseau de Bragg classique permettent d'obtenir un découplage des effets thermiques et mécaniques. Le document B. H. Lee, Y. Chung, W. T. Han et U. C. Paek, « Temperature sensor based on self-interference of a single long-period fiber grating », IEICE Transactions on Electronics, p. 287-292, 2000 décrit un exemple d'une telle combinaison aboutissant à un capteur dont la sensibilité thermique est de 55 pm/°C avec une erreur de 0,2 °C. Un inconvénient de ces capteurs basés sur un réseau à longue période est que le spectre ne peut être exploité qu'en transmission. De plus, le pic du spectre est relativement large, ce qui peut poser des problèmes de détection. Enfin, le réseau à longue période s'étend sur une longueur de 10 à 50 MM, soit une longueur nettement supérieure à celle d'un réseau de Bragg. La résolution des mesures est donc limitée.

Une autre solution, proposée dans G. P. Brady, K. Kalli, D. J. Webb, D. A. Jackson, L. Reekie et J. L. Archambault, « Simultaneous measurement of strain and temperature using the first and second-order diffraction wavelengths of Bragg gratings », IEE Proceedings-Optoelectronics, p. 156-161, 1997, repose sur l'observation des multiples ordres de diffraction d'un unique réseau de Bragg, les sensibilités étant supposées être distinctes pour chaque ordre de diffraction. Il est alors théoriquement possible d'obtenir un système d'équations indépendantes pour un seul réseau de Bragg. Cependant, les incertitudes de mesure en température et en déformation sont relativement importantes, de l'ordre de 0,7 °C et 25 µε (micromètres par mètre).

Il a encore été proposé dans M. G. Xu, J. L. Arcambault, L. Reekie et J. P. Dakin, « Discrimination between strain and temperature effects using dual-wavelength fibre grating sensors », Electronics Letters, p. 1085-1087, 1994 d'inscrire au même endroit de la fibre optique deux réseaux de Bragg présentant des longueurs d'onde de Bragg distinctes. Cette solution permet d'obtenir une bonne résolution spatiale. Toutefois, les incertitudes de mesure sont importantes, de l'ordre de 5 °C et 10 µε.

Les solutions précitées pour mesurer une température et une déformation à l'aide d'un capteur à fibre optique ne donnent donc pas entière satisfaction. Un but de l'invention est donc de proposer un capteur à fibre optique permettant de mesurer de manière simple et fiable au moins une température. L'invention a encore pour objectif de fournir un capteur à fibre optique dont les coûts de conception, de fabrication et de maintenance sont compatibles avec une utilisation à échelle industrielle.

### EXPOSÉ DE L'INVENTION

À cet effet, l'invention repose sur un usinage d'une fibre optique comprenant un réseau de Bragg, l'usinage étant agencé pour isoler le réseau de Bragg de la propagation des contraintes mécaniques subies par la fibre optique. Le réseau de Bragg ne conserve alors qu'une sensibilité en température.

Plus précisément, l'invention a pour objet un capteur de température à réseau de Bragg comprenant une fibre optique comportant un cœur, une gaine optique entourant le cœur et un réseau de Bragg inscrit dans le cœur et s'étendant sur un tronçon de la fibre optique appelé tronçon sensible. Selon l'invention, le cœur comporte une rupture de cœur s'étendant sur un tronçon de la fibre optique appelé tronçon de rupture de cœur, le tronçon de rupture de cœur étant situé au voisinage du tronçon sensible, et la gaine optique comporte une rupture de gaine s'étendant sur un tronçon de la fibre optique appelé tronçon de rupture de gaine, le tronçon de rupture de gaine incluant le tronçon sensible.

La fibre optique peut être une fibre optique à cœur plein, c'est-à-dire une fibre optique dont le cœur est formé à partir d'un matériau, typiquement de la silice. La silice peut éventuellement être dopée afin d'adapter son indice de réfraction et/ou ses propriétés optiques et/ou mécaniques.

Au sens de l'invention, une rupture de cœur sur un tronçon de rupture de cœur s'entend comme une absence du matériau constituant le cœur sur ce tronçon. La rupture de cœur engendre ainsi un vide, une lacune ou une coupure au niveau du cœur de la fibre optique, sur toute la section du cœur et toute la longueur du tronçon de rupture de cœur. La rupture de cœur a pour effet d'empêcher la propagation de contraintes mécaniques entre les deux tronçons de cœur séparés par cette rupture de cœur.

Le voisinage du tronçon sensible s'entend comme l'espace situé à proximité de ce tronçon. Il est par exemple délimité par une distance égale à la longueur du réseau de Bragg (longueur typiquement de l'ordre d'un millimètre, la largeur spectrale du réseau de Bragg étant inversement proportionnelle à sa longueur).

Une rupture de gaine sur un tronçon de rupture de gaine s'entend comme une absence du matériau - ou éventuellement des matériaux - constituant la gaine optique sur au moins une partie annulaire enveloppant le cœur et s'étendant sur ce tronçon. La rupture de gaine peut s'étendre radialement sur toute la section de la gaine optique. La rupture de gaine engendre ainsi un vide, une lacune ou une coupure au niveau de la gaine optique, sur tout ou partie de la section de la gaine optique et toute la longueur du tronçon de rupture de gaine. La rupture de gaine a pour effet d'empêcher la propagation de contraintes mécaniques entre les deux tronçons de gaine optique séparés par cette rupture de gaine ainsi qu'entre la partie du cœur comprenant le réseau de Bragg et une gaine mécanique entourant la gaine optique.

La fibre optique peut comporter une pluralité de réseaux de Bragg inscrits dans le cœur et s'étendant chacun sur un tronçon sensible. Le cœur peut alors comporter, pour chaque réseau de Bragg, une rupture de cœur s'étendant sur un tronçon de rupture de cœur au voisinage du tronçon sensible correspondant. De même, la gaine optique peut alors comporter, pour chaque réseau de Bragg, une rupture de gaine s'étendant sur un tronçon de rupture de gaine incluant le tronçon sensible correspondant.

L'invention a également pour objet un procédé de fabrication d'un capteur à réseau de Bragg à partir d'une fibre optique comportant un cœur, une gaine optique entourant le cœur et un réseau de Bragg inscrit dans le cœur et s'étendant sur un tronçon de la fibre optique appelé tronçon sensible. Selon l'invention, le procédé comprend une étape d'ablation du cœur sur un tronçon de la fibre optique appelé tronçon de rupture de cœur, le tronçon de rupture de cœur étant situé au voisinage du tronçon sensible. Le procédé comprend de plus une étape d'ablation de la gaine optique sur un tronçon de la fibre optique appelé tronçon de rupture de gaine, le tronçon de rupture de gaine incluant le tronçon sensible.

La fibre optique peut comporter une pluralité de réseaux de Bragg inscrits dans le cœur et s'étendant chacun sur un tronçon sensible. L'étape d'ablation du cœur comprend alors, pour chaque réseau de Bragg, une ablation du cœur sur un tronçon de rupture de cœur au voisinage du tronçon sensible correspondant. L'étape d'ablation de la gaine optique comprend alors, pour chaque réseau de Bragg, une ablation de la gaine optique sur un tronçon de rupture de gaine incluant le tronçon sensible correspondant.

L'étape d'ablation du cœur peut comprendre une application d'un faisceau laser femtoseconde focalisé au voisinage du cœur. De préférence, la focalisation est située dans le cœur. De manière analogue, l'étape d'ablation de la gaine optique peut comprendre une application d'un faisceau laser femtoseconde focalisé au voisinage de la gaine optique. De préférence, la focalisation est située dans la gaine optique. Il est à noter que, lors de l'étape d'ablation de la gaine optique, il doit être évité de toucher le cœur de la fibre optique et, plus particulièrement, les motifs du réseau de Bragg. Autrement dit, de la matière ne doit être retirée qu'au niveau de la gaine optique. Du fait de la forme annulaire de la rupture de gaine, la fibre optique peut être tournée autour de son axe longitudinal au cours de l'étape d'ablation de la gaine optique.

Afin d'éviter une transmission de contraintes, par l'intermédiaire de la gaine optique, entre les deux tronçons de cœur séparés par la rupture de cœur, chaque tronçon de rupture de gaine inclut de préférence, en plus d'un tronçon sensible, le tronçon de rupture de cœur correspondant. Autrement dit, un enlèvement de matière est pratiqué dans la gaine optique à la fois sur le tronçon sensible dans lequel est inscrit un réseau de Bragg et sur le tronçon de rupture de cœur. Ainsi, sur le tronçon de rupture de cœur, la matière est retirée sur toute la section du cœur et au moins sur une partie annulaire de la gaine optique enveloppant le cœur.

Le capteur de température et le procédé de fabrication selon l'invention peuvent également être caractérisés par les caractéristiques suivantes.

Le tronçon de rupture de cœur doit présenter la plus petite longueur possible pour minimiser les pertes énergétiques du mode guidé dans le cœur de la fibre optique. Le tronçon de rupture de cœur s'étend par exemple sur une longueur inférieure ou égale à quelques micromètres, de préférence inférieure ou égale à 1 µm (micromètre). Ainsi, un couplage optique est établi entre les deux tronçons de cœur séparés par la rupture de cœur.

La fibre optique peut être microstructurée. En particulier, la gaine optique de la fibre optique peut être microstructurée, c'est-à-dire qu'elle comprend des structures à l'échelle micrométrique présentant un indice de réfraction différent du reste de la gaine optique. En particulier, la gaine optique peut comprendre des barreaux de silice dopée ou non et/ou des canaux creux. Ces structures peuvent notamment être agencées de manière périodique dans un plan transverse de la fibre optique.

Selon une première forme de réalisation, la fibre optique est une fibre optique à cœur suspendu. La gaine optique comprend un anneau interne entourant le cœur et un anneau externe entourant l'anneau interne, l'anneau interne comportant une pluralité de canaux creux s'étendant longitudinalement dans la fibre optique et formant des parois reliant le cœur à l'anneau externe. Les canaux creux présentent de préférence des dimensions identiques, de manière à ce que la fibre optique conserve une symétrie axiale. L'anneau interne comporte au moins deux canaux creux. Dans ce cas, les canaux creux présentent de préférence une forme oblongue dans un plan transverse de la fibre optique afin de former une fine paroi passant par le cœur de la fibre optique. L'anneau interne peut comporter plus de deux canaux creux, en particulier trois ou quatre. Les canaux creux sont alors avantageusement répartis angulairement de manière homogène. À titre d'exemple, pour une gaine optique comportant trois canaux creux, les canaux creux sont avantageusement disposés de manière à former trois parois séparées les unes des autres d'un angle de 120 degrés dans un plan transverse de la fibre optique.

Selon une deuxième forme de réalisation, la fibre optique est une fibre optique à cristal photonique. La gaine optique comprend une pluralité de canaux creux s'étendant longitudinalement dans la fibre optique et étant agencés de manière périodique dans un plan transverse de la fibre optique. Les canaux creux présentent de préférence des dimensions identiques, de manière à ce que la fibre optique conserve une symétrie axiale. Ils peuvent occuper toute la section de la gaine optique ou une partie seulement. En particulier, la gaine optique peut comporter un anneau interne entourant le cœur et un anneau externe entourant l'anneau interne. Les canaux creux peuvent alors être disposés dans l'anneau interne uniquement.

Le capteur de température à réseau de Bragg décrit ci-dessus est agencé pour que le ou les réseaux de Bragg ne subissent pas de déformations d'origine mécanique et ne soient sensibles qu'aux variations de température. Néanmoins, il est possible de ne pas isoler mécaniquement l'ensemble des réseaux de Bragg de la fibre optique, afin que certains réseaux de Bragg restent sensibles à la fois aux déformations d'origine mécanique et aux déformations d'origine thermique. Ainsi, l'invention a encore pour objet un capteur de température et de déformation à réseau de Bragg comprenant un capteur de température tel que décrit ci-dessus, et dans lequel la fibre optique comporte, en outre, au moins un réseau de Bragg inscrit dans le cœur et s'étendant sur un tronçon de la fibre optique appelé tronçon sensible mécaniquement, le cœur étant dépourvu de rupture de cœur au voisinage du tronçon sensible mécaniquement et la gaine optique étant dépourvue de rupture de gaine au voisinage du tronçon sensible mécaniquement.

Le capteur de température et de déformation à réseau de Bragg décrit ci-dessus comporte une pluralité de réseaux de Bragg inscrits dans le cœur d'une même fibre optique, un premier type de réseau de Bragg étant sensible à la fois aux déformations d'origine mécanique et aux déformations d'origine thermique et un deuxième type de réseau de Bragg n'étant sensible qu'aux déformations d'origine thermique. Néanmoins, tous les réseaux de Bragg du premier type peuvent être inscrits dans une première fibre optique et tous les réseaux de Bragg du deuxième type peuvent être inscrits dans une deuxième fibre optique. Ainsi, l'invention a aussi pour objet un ensemble de mesure comportant un capteur de température à réseau de Bragg tel que décrit précédemment et un capteur de température et de déformation à réseau de Bragg. Le capteur de température et de déformation comprend une deuxième fibre optique comportant un cœur, une gaine optique entourant le cœur et au moins un réseau de Bragg inscrit dans le cœur. Dans le capteur de température et de déformation, le cœur est dépourvu de rupture de cœur au voisinage du tronçon dans lequel est inscrit le réseau de Bragg, appelé tronçon sensible mécaniquement, et la gaine optique est dépourvue de rupture de gaine au voisinage du tronçon sensible mécaniquement. De préférence, les fibres optiques des deux capteurs sont associées parallèlement de sorte que chaque tronçon sensible de la fibre optique du capteur de température soit contigu à un tronçon sensible mécaniquement de la deuxième fibre optique du capteur de température et de déformation.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente un exemple de procédé de fabrication d'un capteur à réseau de Bragg selon l'invention à partir d'une fibre optique à cœur suspendu ;
- la figure 2A représente, dans une vue en perspective avec une coupe partielle, un exemple de fibre optique à cœur suspendu pouvant être utilisée pour réaliser un capteur de température selon l'invention ;
- la figure 2B représente, dans une vue identique à celle de la figure 2A, la fibre optique à l'issue d'une étape d'inscription d'un réseau de Bragg ;
- la figure 2C représente, dans une vue identique à celles des figures 2A et 2B, la fibre optique à l'issue d'une étape d'ablation du cœur ;
- la figure 2D représente, dans une vue identique à celle des figures 2A à 2C, la fibre optique à l'issue d'une étape d'ablation de la gaine optique ;
- la figure 3 représente, sur un graphique, la sensibilité à la déformation d'un capteur à réseau de Bragg standard et celle d'un exemple de capteur à réseau de Bragg selon l'invention ;
- la figure 4A représente, dans une vue en perspective avec une coupe partielle, un exemple de fibre optique à cristal photonique pouvant être utilisée pour réaliser un capteur de température selon l'invention ;
- la figure 4B représente, dans une vue identique à celle de la figure 4A, le capteur de température obtenu par application du procédé de fabrication selon l'invention.

### EXPOSÉ DÉTAILLÉ DE MODES DE RÉALISATION PARTICULIERS

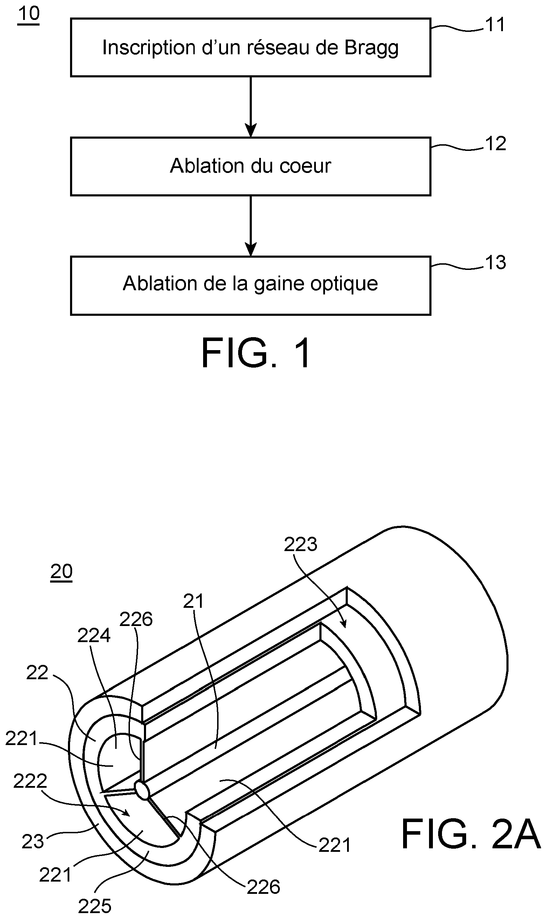

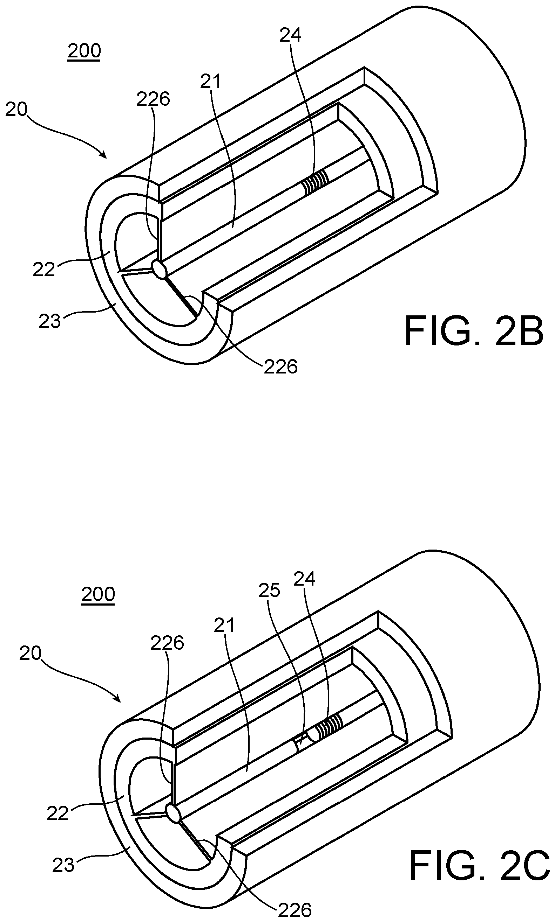

La figure 1 représente un exemple de procédé de fabrication d'un capteur à réseau de Bragg selon l'invention à partir d'une fibre optique à cœur suspendu. La figure 2A représente, dans une vue en perspective avec une coupe partielle, un exemple de fibre optique à cœur suspendu 20 à partir de laquelle le procédé de fabrication 10 peut être mis en œuvre et les figures 2B à 2D illustrent la fibre optique 20 à l'issue de différentes étapes de ce procédé de fabrication. La fibre optique 20 comporte un cœur 21, une gaine optique 22 entourant le cœur 21 et une gaine mécanique 23 entourant la gaine optique 22. Le cœur 21 est formé à partir d'un verre de silice. Il peut être dopé afin de modifier son indice de réfraction et/ou ses propriétés mécaniques. Il présente une forme cylindrique de révolution autour d'un axe longitudinal de la fibre optique 20. La gaine optique 22 comporte trois canaux creux 221, une surface intermédiaire 222 et une surface extérieure 223. La surface extérieure 223 vient en contact avec la gaine mécanique 23. La surface intermédiaire 222 est cylindrique de révolution, centrée sur l'axe longitudinal de la fibre optique 20 et située entre le cœur 21 et la surface extérieure 223. Elle définit pour la gaine optique 22 un anneau interne 224, compris entre le cœur 21 et cette surface intermédiaire 222, et un anneau externe 225, compris entre cette surface intermédiaire 222 et la surface extérieure 223. Chaque canal creux 221 s'étend longitudinalement dans la fibre optique 20 et s'étend radialement dans tout l'anneau interne 224, c'est-à-dire entre le cœur 21 et la surface intermédiaire 222. Chaque canal creux 221 couvre une section angulaire environ égale à 120°, de sorte à former des parois 226 s'étendant radialement entre le cœur 21 et la surface intermédiaire 222. Le cœur 21 se trouve ainsi suspendu à l'anneau externe 225 de la gaine optique 22 par l'intermédiaire des parois 226. Les parois 226 et l'anneau externe 225 forment une pièce monobloc comprenant du verre de silice. De manière générale, préalablement à l'application des étapes du procédé de fabrication 10 d'un capteur à réseau de Bragg, la fibre optique 20 présente un caractère continu le long de son axe longitudinal.

Le procédé de fabrication 10 comprend une première étape 11 d'inscription d'un ou plusieurs réseaux de Bragg 24 dans le cœur 21 de la fibre optique. Chaque réseau de Bragg 24 s'étend selon l'axe longitudinal de la fibre optique 20 sur un tronçon appelé tronçon sensible. La figure 2B représente, dans une vue identique à celle de la figure 2A, la fibre optique 20 à l'issue de cette étape 11. La fibre optique est alors également appelée capteur à réseau de Bragg 200. Il est à noter que le réseau de Bragg 24 est représenté schématiquement par des disques s'étendant sur toute la section du cœur 21. Néanmoins, le capteur à réseau de Bragg selon l'invention ne se limite pas à un réseau de Bragg présentant des motifs sous forme de disque, mais s'applique à tout type de réseau de Bragg, notamment à un réseau de Bragg dont les motifs sont formés par des sphères. Par ailleurs, le réseau de Bragg peut comporter un nombre quelconque de motifs.

Le procédé de fabrication 10 comprend ensuite une deuxième étape 12 d'ablation du cœur 21. La figure 2C représente, dans une vue identique à celle des figures 2A et 2B, la fibre optique 20 à l'issue de cette étape 12. L'ablation du cœur 21 consiste à retirer le cœur 21 sur un tronçon, appelé tronçon de rupture de cœur, situé au voisinage du tronçon sensible, c'est-à-dire au voisinage du réseau de Bragg 24. Le tronçon de rupture de cœur peut être accolé au tronçon sensible. Néanmoins, afin d'éviter un endommagement du motif situé à l'extrémité du réseau de Bragg 24, le tronçon de rupture de cœur est avantageusement décalé, par exemple d'une distance correspondant à la longueur d'onde du réseau de Bragg 24. La partie retirée du cœur 21 est appelée rupture de cœur 25. Le tronçon de rupture de cœur présente par exemple une longueur égale à 1 µm. La longueur doit être suffisamment réduite pour permettre à un signal lumineux utile de franchir la rupture de cœur 25.

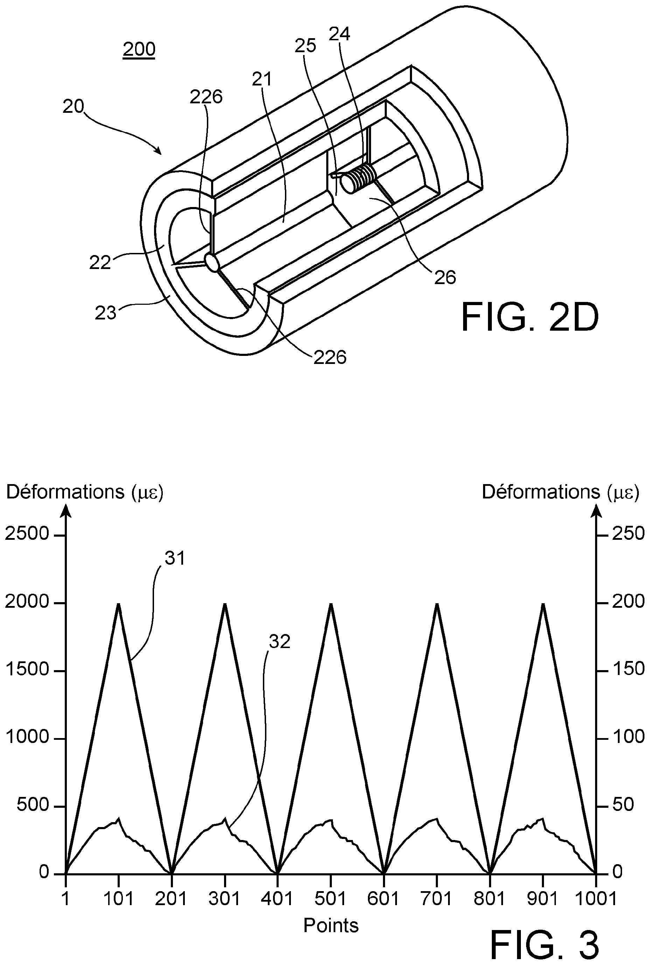

Le procédé de fabrication comprend ensuite une troisième étape 13 d'ablation de la gaine optique 22. La figure 2D représente, dans une vue identique à celle des figures 2A à 2C, la fibre optique 20 à l'issue de cette étape 13. L'ablation de la gaine optique 22 consiste à retirer les parois 226 de la gaine optique 22 sur un tronçon, appelé tronçon de rupture de gaine, incluant au minimum le tronçon sensible. Dans le présent exemple de réalisation, le tronçon de rupture de gaine couvre à la fois le tronçon sensible et le tronçon de rupture de cœur. La partie retirée de la gaine optique 22 est appelée rupture de gaine 26.

L'ablation du cœur 21 et de la gaine optique 22 peut être réalisée par application d'un faisceau laser femtoseconde dans le proche infra-rouge ou dans le domaine ultraviolet. Un faisceau laser femtoseconde est un faisceau laser formé d'impulsions dont la durée est comprise entre quelques femtosecondes et quelques centaines de femtosecondes. Le faisceau laser est focalisé sur la zone à retirer. La puissance de l'impulsion est adaptée en fonction de l'ouverture numérique du faisceau. Au cours des étapes d'ablation, la fibre optique 20 peut être mise en rotation et/ou en translation. La rotation facilite le retrait des parois 226 autour du cœur 21.

Il est à noter que les étapes du procédé de fabrication 10 peuvent être réalisées dans un ordre quelconque. En particulier, le ou les réseaux de Bragg peuvent être inscrits après l'ablation du cœur et de la gaine optique. Par ailleurs, l'ablation de la gaine optique peut être réalisée préalablement à celle du cœur.

La figure 3 représente, sur un graphique, la sensibilité à la déformation d'un capteur à réseau de Bragg standard et celle d'un capteur à réseau de Bragg selon l'invention. Les deux capteurs sont réalisés dans une même fibre optique à cœur creux par inscription dans le cœur de deux réseaux de Bragg présentant des longueurs d'onde de Bragg de 1510 nm et 1550 nm, respectivement. Le réseau de Bragg à 1550 nm est isolé mécaniquement du reste de la fibre optique par ablation du cœur et ablation de la gaine optique, conformément au procédé selon l'invention. Le réseau de Bragg à 1510 nm n'est pas isolé mécaniquement du reste de la fibre optique. La sensibilité à la déformation des deux réseaux de Bragg est déterminée en mesurant un décalage spectral de chacune des longueurs d'onde de Bragg lors d'une déformation de la fibre optique par étirement selon son axe longitudinal. L'étirement appliqué comprend un cycle d'augmentations et de diminutions constantes. Sur le graphique, l'axe des abscisses indique différents points de mesure, correspondants à différentes amplitudes d'étirement, et l'axe des ordonnées indique la déformation de la fibre optique, en micromètres par mètre, cette déformation étant déterminée par chaque réseau de Bragg à partir du décalage de sa longueur d'onde. Une première courbe 31 représente la déformation de la fibre optique déterminée par le réseau de Bragg non isolé mécaniquement et une deuxième courbe 32 représente la déformation de la fibre optique déterminée par le réseau de Bragg isolé mécaniquement. La première courbe indique une déformation maximale de 2000 µε et la deuxième courbe indique une déformation maximale de 40 µε. Ainsi, l'isolation mécanique du réseau de Bragg permet de réduire d'un facteur 50 la sensibilité à la déformation de ce réseau de Bragg.

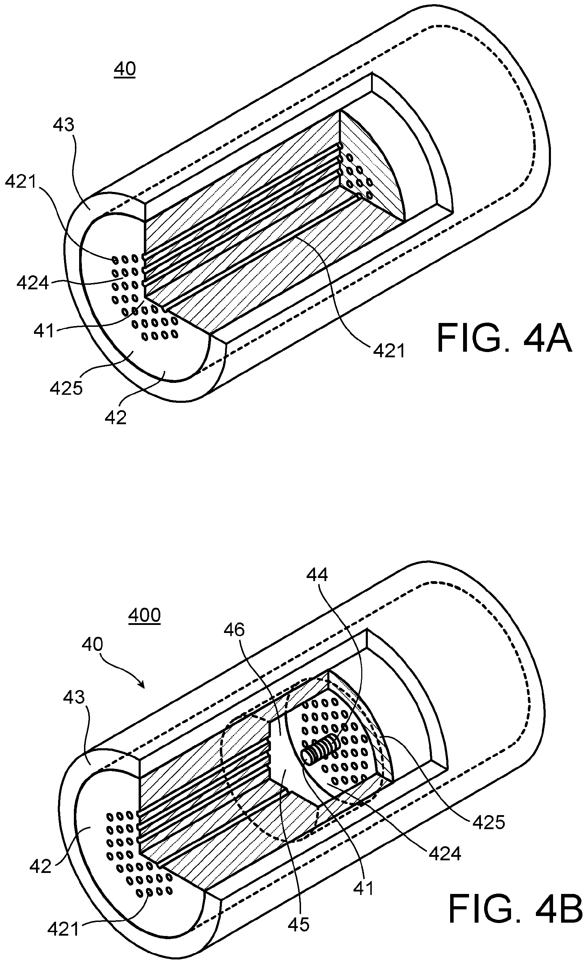

La figure 4A représente, dans une vue en perspective avec une coupe partielle, un exemple de fibre optique à cristal photonique à partir de laquelle le procédé de fabrication peut être mis en œuvre et la figure 4B représente, dans une vue identique, un exemple de capteur à réseau de Bragg obtenu par application du procédé à la fibre optique de la figure 4A. La fibre optique 40 comporte un cœur 41, une gaine optique 42 entourant le cœur 41 et une gaine mécanique 43 entourant la gaine optique 42. La gaine optique 42 comprend un ensemble de canaux creux 421 agencés de manière périodique dans un plan transverse de la fibre optique 40. Les canaux creux 421 présentent une forme de cylindre de révolution et s'étendent parallèlement à un axe longitudinal de la fibre optique 40. La gaine optique 42 peut être fictivement délimitée radialement par un anneau interne 424 et un anneau externe 425. Tous les canaux creux 421 sont disposés dans l'anneau interne 424 de la gaine optique 42, l'anneau externe 425 étant dépourvu de telles microstructures. Le cœur 41 est optiquement formé au centre du réseau de canaux creux 421. Il est à noter que la fibre optique 40 présente une continuité de matière entre le cœur 41 et l'anneau interne 424 de la gaine optique 42, de même qu'entre l'anneau interne 424 et l'anneau externe 425 de la gaine optique 42. Le cœur 41 et la gaine optique 42 sont par exemple formés de verre de silice, éventuellement dopé. Comme la fibre optique 20 représentée sur la figure 2A, la fibre optique 40 présente, préalablement à l'application des étapes du procédé de fabrication selon l'invention, un caractère continu le long de son axe longitudinal.

Sur la figure 4B, la fibre optique 40 est représentée après application des étapes du procédé de fabrication selon l'invention. Elle est alors également appelée capteur à réseau de Bragg 400. Le capteur à réseau de Bragg 400 comprend un réseau de Bragg 44 inscrit dans le cœur 41 et s'étendant sur un tronçon sensible, une rupture de cœur 45 s'étendant sur un tronçon de rupture de cœur s'étendant au voisinage du tronçon sensible et une rupture de gaine 46 s'étendant sur un tronçon de rupture de gaine englobant le tronçon sensible et le tronçon de rupture de cœur. Dans cet exemple de réalisation, le cœur 41 se présente sous forme d'un cylindre de révolution le long du tronçon sensible. Le tronçon de rupture de cœur présente par exemple une longueur égale à 1 µm. Il est à souligner que, dans un but de faciliter la compréhension de l'invention, les proportions des différents éléments du capteur à réseau de Bragg ne sont pas nécessairement respectées. En particulier, la longueur du tronçon de rupture de cœur est de préférence inférieure à celle représentée sur la figure 4B.

La présente invention a été décrite ci-dessus par référence à des capteurs à réseaux de Bragg comprenant une fibre optique à cœur suspendu ou une fibre optique à cristal photonique. Néanmoins, l'invention trouve à s'appliquer à toute fibre optique à réseau de Bragg dès lors qu'il est possible d'extraire de la fibre optique le matériau retiré du cœur et de la gaine optique. Par ailleurs, une même fibre optique peut comporter à la fois un ou plusieurs premiers réseaux de Bragg isolés mécaniquement par la présence d'une rupture de cœur et d'une rupture de gaine au sens de l'invention, et un ou plusieurs deuxièmes réseaux de Bragg non isolés mécaniquement. Les premiers réseaux de Bragg sont alors utilisés comme éléments sensibles uniquement à la température et les deuxièmes réseaux de Bragg sont utilisés comme éléments sensibles à la fois à la température et à la déformation. Le capteur à réseau de Bragg peut ainsi être appelé capteur de température et de déformation à réseau de Bragg.

## Revendications

1. Capteur de température à réseau de Bragg comprenant une fibre optique (20, 40) comportant un cœur (21, 41), une gaine optique (22, 42) entourant le cœur et un réseau de Bragg (24, 44) inscrit dans le cœur et s'étendant sur un tronçon de la fibre optique appelé tronçon sensible, le capteur de température étant **caractérisé en ce que** le cœur (21, 41) comporte une rupture de cœur (25, 45) s'étendant sur un tronçon de la fibre optique appelé tronçon de rupture de cœur, le tronçon de rupture de cœur étant situé au voisinage du tronçon sensible, et **en ce que** la gaine optique (22, 42) comporte une rupture de gaine (26, 46) s'étendant sur un tronçon de la fibre optique appelé tronçon de rupture de gaine, le tronçon de rupture de gaine incluant le tronçon sensible.

2. Capteur de température selon la revendication 1, dans lequel la fibre optique (20, 40) comporte une pluralité de réseaux de Bragg (24, 44) inscrits dans le cœur (21, 41) et s'étendant chacun sur un tronçon sensible, le cœur comportant, pour chaque réseau de Bragg, une rupture de cœur (25, 45) s'étendant sur un tronçon de rupture de cœur au voisinage du tronçon sensible correspondant, la gaine optique (22, 42) comportant, pour chaque réseau de Bragg, une rupture de gaine (26, 46) s'étendant sur un tronçon de rupture de gaine incluant le tronçon sensible correspondant.

3. Procédé de fabrication d'un capteur à réseau de Bragg à partir d'une fibre optique (20, 40) comportant un cœur (21, 41), une gaine optique (22, 42) entourant le cœur et un réseau de Bragg (24, 44) inscrit dans le cœur et s'étendant sur un tronçon de la fibre optique appelé tronçon sensible, le procédé étant **caractérisé en ce qu'**il comprend une étape (12) d'ablation du cœur sur un tronçon de la fibre optique appelé tronçon de rupture de cœur, le tronçon de rupture de cœur étant situé au voisinage du tronçon sensible, et une étape (13) d'ablation de la gaine optique sur un tronçon de la fibre optique appelé tronçon de rupture de gaine, le tronçon de rupture de gaine incluant le tronçon sensible.

4. Procédé de fabrication selon la revendication 3, dans lequel la fibre optique (20, 40) comporte une pluralité de réseaux de Bragg (24, 44) inscrits dans le cœur (21, 41) et s'étendant chacun sur un tronçon sensible, l'étape (12) d'ablation du cœur comprenant, pour chaque réseau de Bragg, une ablation du cœur sur un tronçon de rupture de cœur au voisinage du tronçon sensible correspondant, l'étape (13) d'ablation de la gaine optique comprenant, pour chaque réseau de Bragg, une ablation de la gaine optique sur un tronçon de rupture de gaine incluant le tronçon sensible correspondant.

5. Procédé de fabrication selon l'une des revendications 3 et 4, dans lequel l'étape (12) d'ablation du cœur comprend une application d'un faisceau laser femtoseconde focalisé au voisinage du cœur (21, 41), et/ou l'étape (13) d'ablation de la gaine optique comprend une application d'un faisceau laser femtoseconde focalisé au voisinage de la gaine optique (22,42).

6. Capteur de température selon l'une des revendications 1 et 2 ou procédé de fabrication selon l'une des revendications 3 à 5, dans lequel chaque tronçon de rupture de gaine inclut, en plus d'un tronçon sensible, le tronçon de rupture de cœur correspondant.

7. Capteur de température selon l'une des revendications 1, 2 et 6 ou procédé de fabrication selon l'une des revendications 3 à 6, dans lequel le tronçon de rupture de cœur s'étend sur une longueur inférieure ou égale à 10 micromètres.

8. Capteur de température selon l'une des revendications 1, 2, 6 et 7 ou procédé de fabrication selon l'une des revendications 3 à 7, dans lequel la gaine optique (22, 42) est microstructurée.

9. Capteur de température ou procédé de fabrication selon la revendication 8, dans lequel la fibre optique (20) est une fibre optique à cœur suspendu, la gaine optique (22) comprenant un anneau interne (224) entourant le cœur (21) et un anneau externe (225) entourant l'anneau interne, l'anneau interne (224) comportant une pluralité de canaux creux (221) s'étendant longitudinalement dans la fibre optique et formant des parois (226) reliant le cœur à l'anneau externe.

10. Capteur de température ou procédé de fabrication selon la revendication 8, dans lequel la fibre optique (40) est une fibre optique à cristal photonique, la gaine optique (42) comprenant une pluralité de canaux creux (421) s'étendant longitudinalement dans la fibre optique et étant agencés de manière périodique dans un plan transverse de la fibre optique.

11. Capteur de température et de déformation à réseau de Bragg comprenant un capteur de température (200, 400) selon l'une des revendications 1, 2 et 6 à 10, dans lequel la fibre optique (20, 40) comporte, en outre, au moins un réseau de Bragg inscrit dans le cœur et s'étendant sur un tronçon de la fibre optique appelé tronçon sensible mécaniquement, le cœur étant dépourvu de rupture de cœur au voisinage du tronçon sensible mécaniquement et la gaine optique étant dépourvue de rupture de gaine au voisinage du tronçon sensible mécaniquement.

12. Ensemble de mesure comportant un capteur de température à réseau de Bragg (200, 400) selon l'une des revendications 1, 2 et 6 à 10 et un capteur de température et de déformation à réseau de Bragg, le capteur de température et de déformation comprenant une deuxième fibre optique comportant un cœur, une gaine optique entourant le cœur et au moins un réseau de Bragg inscrit dans le cœur.

## Patentansprüche

1. Temperatursensor mit Bragg-Gitter, enthaltend eine optische Faser (20, 40) mit einem Kern (21, 41), einer den Kern umgebenden optischen Hülle (22, 42) und einem Bragg-Gitter (24, 44), das in den Kern eingeschrieben ist und sich über einen Abschnitt der optischen Faser, sensitiver Abschnitt genannt, erstreckt, wobei der Temperatursensor **dadurch gekennzeichnet ist, dass** der Kern (21, 41) eine Kernunterbrechung (25, 45) aufweist, die sich über einen Abschnitt der optischen Faser, Kernunterbrechungsabschnitt genannt, erstreckt, wobei der Kernunterbrechungsabschnitt in der Nähe des sensitiven Abschnitts liegt, und dass die optische Hülle (22, 42) eine Hüllenunterbrechung (26, 46) aufweist, die sich über einen Abschnitt der optischen Faser, Hüllenunterbrechungsabschnitt genannt, erstreckt, wobei der Hüllenunterbrechungsabschnitt den sensitiven Abschnitt umfasst.

2. Temperatursensor nach Anspruch 1, wobei die optische Faser (20, 40) eine Vielzahl von Bragg-Gittern (24, 44) aufweist, die in den Kern (21, 41) eingeschrieben sind und sich jeweils über einen sensitiven Abschnitt erstrecken, wobei der Kern für jedes Bragg-Gitter eine Kernunterbrechung (25, 45) aufweist, die sich über einen Kernunterbrechungsabschnitt in der Nähe des entsprechenden sensitiven Abschnitts erstreckt, wobei die optische Hülle (22, 42) für jedes Bragg-Gitter eine Hüllenunterbrechung (26, 46) aufweist, die sich über einen Hüllenunterbrechungsabschnitt erstreckt, der den entsprechenden sensitiven Abschnitt umfasst.

3. Verfahren zum Herstellen eines Sensor mit Bragg-Gitter aus einer optischen Faser (20, 40) mit einem Kern (21, 41), einer den Kern umgebenden optischen Hülle (22, 42) und einem Bragg-Gitter (24, 44), das in den Kern eingeschrieben ist und sich über einen Abschnitt der optischen Faser, sensitiver Abschnitt genannt, erstreckt, wobei das Verfahren **dadurch gekennzeichnet ist, dass** es einen Schritt (12) des Abtragens des Kerns über einen Abschnitt der optischen Faser, Kernunterbrechungsabschnitt genannt, umfasst, wobei sich der Kernunterbrechungsabschnitt in der Nähe des sensitiven Abschnitts befindet, sowie einen Schritt (13) des Abtragens der optischen Hülle über einen Abschnitt der optischen Faser, Hüllenunterbrechungsabschnitt genannt, wobei der Hüllenunterbrechungsabschnitt den sensitiven Abschnitt umfasst.

4. Herstellungsverfahren nach Anspruch 3, wobei die optische Faser (20, 40) eine Vielzahl von Bragg-Gittern (24, 44) aufweist, die in den Kern (21, 41) eingeschrieben sind und sich jeweils über einen sensitiven Abschnitt erstrecken, wobei der Schritt (12) des Abtragens des Kerns für jedes Bragg-Gitter ein Abtragen des Kerns über einen Kernunterbrechungsabschnitt in der Nähe des entsprechenden sensitiven Abschnitts umfasst, wobei der Schritt (13) des Abtragens der optischen Hülle für jedes Bragg-Gitter ein Abtragen der optischen Hülle über einen Hüllenunterbrechungsabschnitt umfasst, der den entsprechenden sensitiven Abschnitt umfasst.

5. Herstellungsverfahren nach einem der Ansprüche 3 oder 4, wobei der Schritt (12) des Abtragens des Kerns eine Anwendung eines Femtosekunden-Laserstrahls umfasst, der in der Nähe des Kerns (21, 41) fokussiert wird, und/oder der Schritt (13) des Abtragens der optischen Hülle eine Anwendung eines Femtosekunden-Laserstrahls umfasst, der in der Nähe der optischen Hülle (22, 42) fokussiert wird.

6. Temperatursensor nach einem der Ansprüche 1 und 2 oder Herstellungsverfahren nach einem der Ansprüche 3 bis 5, wobei jeder Hüllenunterbrechungsabschnitt zusätzlich zu einem sensitiven Abschnitt den entsprechenden Kernunterbrechungsabschnitt umfasst.

7. Temperatursensor nach einem der Ansprüche 1, 2 und 6 oder Herstellungsverfahren nach einem der Ansprüche 3 bis 6, wobei sich der Kernunterbrechungsabschnitt über eine Länge von weniger als oder gleich 10 Mikrometern erstreckt.

8. Temperatursensor nach einem der Ansprüche 1, 2, 6 und 7 oder Herstellungsverfahren nach einem der Ansprüche 3 bis 7, wobei die optische Hülle (22, 42) mikrostrukturiert ist.

9. Temperatursensor oder Herstellungsverfahren nach Anspruch 8, wobei die optische Faser (20) eine optische Faser mit abgehängtem Kern ist, wobei die optische Hülle (22) einen inneren Ring (224), der den Kern (21) umgibt, und einen äußeren Ring (225), der den inneren Ring umgibt, enthält, wobei der innere Ring (224) eine Vielzahl von hohlen Kanälen (221) aufweist, die sich in Längsrichtung in der optischen Faser erstrecken und Wandungen (226) bilden, die den Kern mit dem äußeren Ring verbinden.

10. Temperatursensor oder Herstellungsverfahren nach Anspruch 8, wobei die optische Faser (40) eine optische Faser mit photonischem Kristall ist, wobei die optische Hülle (42) eine Vielzahl von hohlen Kanälen (421) aufweist, die sich in Längsrichtung in der optischen Faser erstrecken und periodisch in einer Querebene der optischen Faser angeordnet sind.

11. Temperatur- und Verformungssensor mit Bragg-Gitter, enthaltend einen Temperatursensor (200, 400) nach einem der Ansprüche 1, 2 und 6 bis 10, wobei die optische Faser (20, 40) ferner mindestens ein Bragg-Gitter aufweist, das in den Kern eingeschrieben ist und sich über einen Abschnitt der optischen Faser, mechanisch sensitiver Abschnitt genannt, erstreckt, wobei der Kern in der Nähe des mechanisch sensitiven Abschnitts keine Kernunterbrechung aufweist und die optische Hülle in der Nähe des mechanisch sensitiven Abschnitts keine Hüllenunterbrechung aufweist.

12. Messanordnung mit einem Temperatursensor mit Bragg-Gitter (200, 400) nach einem der Ansprüche 1, 2 und 6 bis 10 und einem Temperatur- und Verformungssensor mit Bragg-Gitter, wobei der Temperatur- und Verformungssensor eine zweite optische Faser mit einem Kern, einer den Kern umgebenden optischen Hülle und mindestens einem in den Kern eingeschriebenen Bragg-Gitter aufweist.

## Claims

1. Bragg grating temperature sensor comprising an optical fiber (20, 40) including a core (21, 41), an optical cladding (22, 42) surrounding the core and a Bragg grating (24, 44) incorporated in the core and extending along a segment of the optical fibre called sensitive segment, the temperature sensor being **characterised in that** the core (21, 41) includes a core gap (25, 45) extending along a segment of the optical fibre called core gap segment, the core gap segment being located in the vicinity of the sensitive segment, and **in that** the optical cladding (22, 42) includes a cladding gap (26, 46) extending along a segment of the optical fibre called cladding gap segment, the cladding gap segment including the sensitive segment.

2. Temperature sensor according to claim 1, wherein the optical fibre (20, 40) includes a plurality of Bragg gratings (24, 44) incorporated in the core (21, 41) and each extending along a sensitive segment, the core including, for each Bragg grating, a core gap (25, 45) extending along a core gap segment in the vicinity of the corresponding sensitive segment, the optical cladding (22, 42) including, for each Bragg grating, a cladding gap (26, 46) extending along a cladding gap segment including the corresponding sensitive segment.

3. Method for manufacturing a Bragg grating sensor from an optical fibre (20, 40) including a core (21, 41), an optical cladding (22, 42) surrounding the core and a Bragg grating (24, 44) incorporated in the core and extending along a segment of the optical fibre called sensitive segment, the method being **characterised in that** it comprises a step (12) of ablating the core along a segment of the optical fibre called core gap segment, the core gap segment being located in the vicinity of the sensitive segment, and a step (13) of ablating the optical cladding along a segment of the optical fibre called cladding gap segment, the cladding gap segment including the sensitive segment.

4. Manufacturing method according to claim 3, wherein the optical fibre (20, 40) includes a plurality of Bragg gratings (24, 44) incorporated in the core (21, 41) and each extending along a sensitive segment, the step (12) of ablating the core comprising, for each Bragg grating, ablating the core along a core gap segment in the vicinity of the corresponding sensitive segment, the step (13) of ablating the optical cladding comprising, for each Bragg grating, ablating the optical cladding along a cladding gap segment including the corresponding sensitive segment.

5. Manufacturing method according to one of claims 3 and 4, wherein the step (12) of ablating the core comprises an application of a femtosecond laser beam focused in the vicinity of the core (21, 41), and/or the step (13) of ablating the optical cladding comprises an application of a femtosecond laser beam focused in the vicinity of the optical cladding (22, 42).

6. Temperature sensor according to one of claims 1 and 2 or manufacturing method according to one of claims 3 to 5, wherein each cladding gap segment includes, in addition to a sensitive segment, the corresponding core gap segment.

7. Temperature sensor according to one of claims 1, 2 and 6 or manufacturing method according to one of claims 3 to 6, wherein the core gap segment extends over a length less than or equal to 10 micrometres.

8. Temperature sensor according to one of claims 1, 2, 6 and 7 or manufacturing method according to one of claims 3 to 7, wherein the optical cladding (22, 42) is microstructured.

9. Temperature sensor or manufacturing method according to claim 8, wherein the optical fibre (20) is a suspended-core optical fibre, the optical cladding (22) comprising an inner ring (224) surrounding the core (21) and an outer ring (225) surrounding the inner ring, the inner ring (224) including a plurality of hollow channels (221) extending longitudinally in the optical fibre and forming walls (226) connecting the core to the outer ring.

10. Temperature sensor or manufacturing method according to claim 8, wherein the optical fibre (40) is a photonic crystal optical fibre, the optical cladding (42) comprising a plurality of hollow channels (421) extending longitudinally in the optical fibre and being arranged periodically in a transverse plane of the optical fibre.

11. Bragg grating temperature and deformation sensor comprising a temperature sensor (200, 400) according to one of claims 1, 2 and 6 to 10, wherein the optical fibre (20, 40) further includes at least one Bragg grating incorporated in the core and extending along a segment of the optical fibre called mechanically sensitive segment, the core being devoid of a core gap in the vicinity of the mechanically sensitive segment and the optical cladding being devoid of a cladding gap in the vicinity of the mechanical sensitive segment.

12. Measurement unit including a Bragg grating temperature sensor (200, 400) according to one of claims 1, 2 and 6 to 10 and a Bragg grating temperature and deformation sensor, the temperature and deformation sensor comprising a second optical fibre including a core, an optical cladding surrounding the core and at least one Bragg grating incorporated in the core.
